# EUROPÄISCHE PATENTANMELDUNG

(11) **EP 4 293 263 A1**
(43) Veröffentlichungstag der Anmeldung: **20.12.2023**
(21) Anmeldenummer: 22178804.5
(22) Anmeldetag: 14.06.2022
(51) Int. Cl.: F16L 5/04, A62C 2/06

(54) **BRANDSCHUTZMANSCHETTE**

(71) Anmelder: Hilti Aktiengesellschaft, 9494 Schaan (LI)
(72) Erfinder: Förg, Christian, 86807 Buchloe (DE)
(74) Vertreter: Hilti Aktiengesellschaft Corporate Intellectual Property

(57) **Zusammenfassung**

Die vorliegende Erfindung betrifft eine Brandschutzmanschette für ein Rohr. Die Brandschutzmanschette umfasst ein Bandpaket zumindest teilweise ein intumeszierendes Material aufweisend, ein erstes und ein zweites Verschlusselement. Das erste Verschlusselement ist an einem ersten Ende des Bandpakets angeordnet und das zweite Verschlusselement ist an einem dem ersten Ende entgegengesetzten zweiten Ende des Bandpakets angeordnet. Das erste Verschlusselement und das zweite Verschlusselement sind miteinander derart verschließbar, dass das Bandpaket eine im Wesentlichen geschlossene Kontur ausbildet. Das Bandpaket weist zwischen dem ersten Ende und dem zweiten Ende des Bandpakets eine Paketlänge auf und ist zumindest teilweise entlang der Paketlänge freiliegend.

## Beschreibung

Die vorliegende Erfindung betrifft eine Brandschutzmanschette für ein Rohr.

Brandschutzmanschetten werden genutzt, um für Rohre, insbesondere Kunststoffrohre, die durch Wände geführt werden, Abschottungslösungen bereitzustellen. Das Ziel ist, den Wand- oder Deckendurchbruch, durch den das Rohr geführt wird, im Brandfall, sobald das geschmolzene oder verbrannte Rohr keine Abdichtung mehr bereitstellt, zu verschließen. Dazu weisen Brandschutzmanschetten ein intumeszierendes Material auf. Intumeszierende Materialien weisen die Eigenschaft auf, sich oberhalb einer bestimmten Grenztemperatur auszudehnen. Während der Ausdehnung schäumt das Material auf und verkohlt anschließend, wodurch eine thermische isolierende widerstandsfähige Schicht bereitgestellt wird. So kann der Wand- oder Deckendurchbruch im Brandfall sicher verschlossen werden, um ein Ausbreiten der Flammen durch den Wand- oder Deckendurchbruch hindurch in angrenzende Räume zu verhindern.

Da die Anwendungsfälle voneinander abweichen und im Allgemeinen Kunststoffrohre unterschiedlicher Durchmesser verwendet werden, sind beispielsweise Endlosmanschetten bekannt. Endlosmanschetten weisen einen Streifen mit intumeszierendem Material auf, der im Installationsfall je nach Durchmesser des Kunststoffrohrs durch den Nutzer vor Ort zugeschnitten wird. Dies ermöglicht einerseits vergleichsweise niedrige Fertigungskosten für den Hersteller, da dieser lediglich ein "Endlosband" herstellen muss. Andererseits verursachen Endlosmanschetten für den Nutzer einen vergleichsweise hohen Arbeitsaufwand, um eine passende Manschette in Abhängigkeit des Durchmessers des jeweiligen Kunststoffrohrs zu erhalten. Der Aufwand erhöht sich noch zusätzlich, wenn keine passende Haltestruktur durch den Hersteller bereitgestellt wird, sondern die Haltestruktur, die im Anwendungsfall außenliegend zum intumeszierenden Material angeordnet ist, durch ein ebenfalls vom Nutzer zuzuschneidendes Metallband realisiert wird. Dann muss der Nutzer also zwei maßgeschneiderte Teilstücke in Abhängigkeit des Durchmessers des Kunststoffrohrs zuschneiden. Dies führt oftmals, beispielsweise bei ungeübten Nutzern, zu verhältnismäßig viel Verschnitt und damit ungewolltem Abfall und ebenfalls zu hohen Kosten.

Als Alternative zu Endlosmanschetten sind vorgefertigte Manschetten bekannt, die zwei Hülsenelemente aufweisen, welche um das Rohr herumgelegt werden, aneinander befestigt werden und jeweils einen Aufnahmeraum für das intumeszierende Material aufweisen. Die Hülsenelemente können Haltestrukturen aufweisen, mittels den die Hülsenelemente an der Wand fixierbar sind. Allerdings sind derartige Hülsenelemente typischerweise mit Stanz- und Biegewerkzeugen zu fertigen, wobei für unterschiedliche Rohrdurchmesser unterschiedliche Stanz- und Biegewerkzeuge durch den Hersteller der Manschette vorgehalten werden müssen. Für den Hersteller ist die Amortisationszeit dieser Werkzeuge speziell bei nicht häufig verbauten Rohrgrößen oftmals sehr lang. Die vergleichsweise geringen Stückzahlen, die am Markt abgesetzt werden können, rechtfertigten deshalb die Investition in derart spezielle und damit kostenintensive Werkzeuge oftmals nicht.

Eine weitere Komplikation tritt bei vorgefertigten Manschetten dadurch auf, dass die intumeszierende Schicht in der Regel mehrlagig in dem jeweiligen Gehäuse des Hülsenelements angeordnet ist. Für den Hersteller führt der zunehmende Radius, bemessen vom Zentrum des Kunststoffrohrs aus, dazu, dass die unterschiedlichen Lagen des intumeszierenden Materials unterschiedliche Längen aufweisen müssen. Dennoch müssen die einzelnen Lagen zu einem Paket zusammengefügt werden, um im Aufnahmeraum platzierbar zu sein, was typischerweise mit verhältnismäßig viel Handarbeit unter Einsatz zusätzlicher Materialien, wie Klebebändern, durchgeführt wird. Dadurch wird der Fertigungsaufwand nochmals erhöht.

Der Erfindung liegt daher die Aufgabe zugrunde, eine Brandschutzmanschette bereitzustellen, mittels der die Nachteile bekannter Brandschutzmanschetten ausgeräumt oder zumindest verringert werden können. Insbesondere soll der jeweilige Wand- oder Deckendurchbruch im Bedarfsfall zuverlässig verschlossen werden. Bevorzugt soll die erfindungsgemäße Brandschutzmanschette mit einem verringerten Aufwand für den Nutzer und den Hersteller einhergehen. Besonders bevorzugt soll insbesondere für den Nutzer der Brandschutzmanschette mit Ausnahme des üblichen Installationsaufwands kein zusätzlicher Fertigungsaufwand entstehen.

Die Aufgabe wird durch den Gegenstand des unabhängigen Patentanspruchs gelöst. Vorteilhafte Ausgestaltungen sind in den abhängigen Patentansprüchen und der nachfolgenden Beschreibung angegeben, von denen jeder für sich oder in (Sub-)Kombination Aspekte der Erfindung darstellen kann.

Gemäß einem Aspekt wird eine Brandschutzmanschette für ein Rohr bereitgestellt. Die Brandschutzmanschette umfasst ein Bandpaket, welches zumindest teilweise ein intumeszierendes Material aufweist. Ferner umfasst die Brandschutzmanschette ein erstes und ein zweites Verschlusselement. Das erste Verschlusselement ist an einem ersten Ende des Bandpakets angeordnet und das zweite Verschlusselement ist an einem dem ersten Ende entgegengesetzten zweiten Ende des Bandpakets angeordnet. Das erste Verschlusselement und das zweite Verschlusselement sind miteinander derart verschließbar, dass das Bandpaket eine im Wesentlichen geschlossene Kontur ausbildet. Das Bandpaket weist zwischen dem ersten Ende und dem zweiten Ende des Bandpakets eine Paketlänge auf und ist zumindest teilweise entlang der Paketlänge freiliegend.

Die so ausgebildete Brandschutzmanschette ermöglicht vorteilhafterweise einen geringen Fertigungsaufwand für den Hersteller und vermeidet, dass für den Installateur oder Nutzer ein Zusatzaufwand mit Ausnahme der üblichen Installationshandlungen überhaupt entsteht. Durch die an den entgegengesetzten Enden des Bankpakets angeordneten Verschlusselemente und die Tatsache, dass das Bandpaket zwischen den Verschlusselementen zumindest teilweise freiliegend ist, kommt die Brandschutzmanschette ohne komplexe Formteile aus, für die kostenintensive Stanz- oder Biegewerkzeuge vom Hersteller vorgehalten werden müssten. Zudem wird dadurch, dass die Verschlusselemente an den Enden des Bandpakets angeordnet sind, auch eine kostengünstige Adaptierbarkeit der Herstellung in Bezug auf unterschiedliche Rohrdurchmesser bereitgestellt, da im Bedarfsfall lediglich die Paketlänge des Bandpakets angepasst werden muss. Die Verschlusselemente müssen aber nicht modifiziert werden. Ferner muss das Bandpaket nicht aufwendig in einem Aufnahmeraum eines Hülsenelements positioniert werden.

Da der Hersteller die Brandschutzmanschette somit selbst für unterschiedliche Rohrdurchmesser mit verhältnismäßig geringem Aufwand herstellen kann, entfällt auch bezüglich des Rohrdurchmessers mit Ausnahme der Anpassung der Paketlänge jegliche Vor-Ort-Anpassungsmaßnahme durch den Installateur oder Nutzer. Für den Installateur ist ferner vorteilhaft, dass die Verschlusselemente zudem auch gleich die Möglichkeit aufweisen, um aneinander fixiert zu werden, sodass die Brandschutzmanschette die geschlossene Kontur ausbildet und um das Rohr herum gelegt und umlaufend angeordnet werden kann. Dadurch wird die Installation vereinfacht. Sowohl der Herstellungs- als auch der Installationsaufwand sind deshalb gering.

Bevorzugt weist das Bandpaket entlang der Paketlänge mehrere separate, parallel angeordnete Bänder auf. Daher ist unter einem Bandpaket im Kontext der vorliegenden Anmeldung eine zumindest zweilagige, im allgemeinen auch mehrlagige Anordnung parallel angeordneter Bänder zu verstehen. Insbesondere kann das Bandpaket zwischen zwei und acht, vorzugsweise zwischen vier und sieben, generell separate Bändern aufweisen. Die Anzahl der Lagen der Bänder des Bandpakets hängt dabei im Allgemeinen vom Rohrdurchmesser und damit der Größe des Wand- oder Deckendurchbruchs ab.

Unter den Bändern sind generell separate streifenförmige Komponenten zu verstehen. Vorliegend umfassen die streifenförmigen Komponenten zumindest teilweise das intumeszierende Material. Die streifenförmigen Komponenten sind entlang ihrer Längserstreckungsrichtung und der Breite im Wesentlichen parallel (gestapelt) zueinander angeordnet und weisen typischerweise gleiche Streifenbreiten senkrecht zur Längserstreckungsrichtung auf. Alternativ oder kumulativ sind auch die Streifendicken der streifenförmigen Komponenten gleich.

Optional weisen die Bänder des Bandpakets unterschiedliche Bandlängen entlang ihrer Längserstreckungsrichtung auf. Nach erfolgtem Einbau ist die Längserstreckungsrichtung parallel zum Umfang des Rohrs orientiert.

Die Verschlusselemente weisen vorliegend Verschlussabschnitte derart auf, dass eine Fixierung aneinander mittels zumindest einer formschlüssigen Verbindung ermöglicht wird. Dadurch wird eine geschlossene Kontur der Brandschutzmanschette nach erfolgter Installation um das Rohr herum gewährleistet. Insbesondere kann die Verbindung zusätzlich oder alternativ auch reibschlüssig sein. Weiterhin kann die Verbindung auch kraftschlüssig sein. Zusätzlich oder alternativ können auch Federkraft bewirkende Sicherungskomponenten vorgesehen sein, um ein Lösen der Fixierung zu vermeiden.

Unter der Paketlänge ist vorliegend diejenige Länge eines Bands der Mehrzahl an Bändern des Bandpakets zu verstehen, die bezüglich der unterschiedlichen Bänder maximal ist.

Optional fasst das jeweilige Verschlusselement das Bandpaket am jeweiligen Ende zumindest teilweise ein. Da das Bandpaket mehrere Bänder umfasst, bedeutet das, dass jedes Verschlusselement zumindest ein Band des Bandpakets einfasst. Unter Einfassen ist vorliegend zu verstehen, dass das Verschlusselement an dem jeweils eingefassten Band fixiert ist, beispielsweise mittels einer Klemmverbindung oder einer Hakenverbindung. Optional kann jedes Verschlusselement auch mehrere generell separate Bänder des Bandpakets einfassen.

In einer besonderen Ausgestaltung sind erste die Paketlänge definierende Bandenden der Bänder des Bandpakets am ersten Ende des Bandpakets relativ zueinander bündig angeordnet und die Paketlänge definierende, den ersten Bandenden entgegengesetzte, zweite Bandenden der Bänder am zweiten Ende des Bandpakets relativ zueinander ebenfalls bündig angeordnet.

Optional fasst jedes Verschlusselement alle generell separaten Bänder des Bandpakets an dem jeweiligen Ende ein. Dadurch wird eine besonders stabile Ausgestaltung der Brandschutzmanschette ermöglicht.

In einer alternativen Ausgestaltung sind erste die Paketlänge definierende Bandenden der Bänder des Bandpakets am ersten Ende des Bandpakets relativ zueinander bündig angeordnet und die zweiten Bandenden am zweiten Ende des Bandpakets entlang der Paketlänge zueinander versetzt angeordnet.

Optional fasst ein Verschlusselement alle generell separaten Bänder des Bandpakets an dem ersten Ende ein. Im Gegensatz dazu fasst das komplementäre Verschlusselement in dieser Ausgestaltung lediglich eine verminderte Anzahl der Bänder, insbesondere lediglich ein Band, des Bandpakets ein. In dieser Ausgestaltung weist die Brandschutzmanschette eine erhöhte Flexibilität auf, da zumindest einige der Bänder des Bandpakets lediglich an einem Ende fixiert sind. Für komplexe und schwierige Einbausituationen kann dies von Vorteil sein. Generell wird dasjenige Band des Bandpakets von beiden Verschlusselementen eingefasst, das nach erfolgtem Einbau außenliegend bezüglich des radialen Abstands zum Rohr angeordnet ist, um welches die Brandschutzmanschette herum angeordnet ist. Das führt jedoch dazu, dass das außenliegende Band des Bandpakets im Brandfall sämtliche Intumeszenzkräfte aller Bänder des Bandpakets aufnehmen muss. Insofern muss das außenliegende Band bezüglich seiner Tragfähigkeit geeignet sein, das sich im Brandfall ausdehnende intumeszierende Material entlang der radialen Richtung in Richtung des Zentrums der Brandschutzmanschette zu zwingen, damit der für das Rohr bereitgestellte Wand- oder Deckendurchbruch verschlossen werden kann. Deshalb kann in dieser Ausgestaltung zumindest das außenliegende Band des Bandpakets eine entsprechend ausgebildete Trägerschicht umfassen, die eine ausreichende Festigkeit bereitstellt. Generell können natürlich sämtliche Bänder des Bandpakets eine derartige Trägerschicht umfassen, wodurch eine Herstellung unterschiedlicher Bandtypen des Bandpakets vermieden werden kann.

Optional oder kumulativ weist jedes Verschlusselement zumindest eine Befestigungsvorrichtung auf, mittels der die Brandschutzmanschette an einer externen Aufnahme fixierbar ist. Insbesondere kann die Befestigungsvorrichtung eingerichtet sein, damit die Brandschutzmanschette an der Wand, der Decke, oder dem Boden montiert werden kann, die/der den Wand- oder Deckendurchbruch für das Rohr aufweist, der im Brandfall abzudichten ist.

Bevorzugt kann die Befestigungsvorrichtung zumindest eine Öse, ein Langloch oder einen entsprechenden Abschnitt aufweisen, mittels der/dem das jeweilige Verschlusselement an der externen Aufnahme fixierbar ist, und die/der zumindest einen Freiheitsgrad bezüglich der Positionierung bereitstellt.

Die Brandschutzmanschette kann optional zumindest eine Montagevorrichtung aufweisen, die das Bandpaket zwischen dem ersten Ende und dem zweiten Ende zumindest teilweise einfasst und abfängt. Die Montagevorrichtung kann als zusätzliche Stabilisationsvorrichtung angesehen werden, mit der die generell separaten Bänder des Bandpakets punktuell im Bereich der Montagevorrichtung miteinander gekoppelt werden. Obwohl die Bänder des Bandpakets generell separat sind, wird dadurch eine vorteilhafte Einheit gebildet, sodass die Handhabbarkeit vereinfacht wird.

Optional ist die Montagevorrichtung entlang der Paketlänge verschiebbar. Dadurch kann die bedarfsgerechte Positionierung der Montagevorrichtung besonders vorteilhaft entlang der Paketlänge gewährleistet werden.

Alternativ oder kumulativ weist die Montagevorrichtung zumindest eine zusätzliche Befestigungsvorrichtung auf, mittels der die Brandschutzmanschette an der externen Aufnahme fixierbar ist. Die Montagevorrichtung kann deshalb ebenfalls zur Fixierung der Brandschutzmanschette beitragen. Besonders vorteilhaft die Fixierung dabei durch die verschiebbare Montagevorrichtung an unterschiedlichen relativen Positionen entlang der Paketlänge des Bandpakets gewährleistet.

Optional ist an das Bandpaket, der Paketlänge nach angrenzend, eine Kunststoffschicht angeordnet ist, insbesondere eine Schaumstoffschicht. Die Kunststoffschicht ist also flächig parallel zum Bandpaket angeordnet (gestapelt). Die Kunststoffschicht kann bei montierter Brandschutzmanschette insbesondere entlang der radialen Richtung bezüglich des Zentrums der Brandschutzmanschette innenliegend relativ zum Bandpaket angeordnet sein. Dadurch wird der Innendurchmesser der Brandschutzmanschette reduziert. Die Kunststoffschicht kann dann als Pufferschicht bezüglich des Rohrs fungieren, um dass die Brandschutzmanschette montiert wird. Bei geeigneter Materialwahl bewirkt die Kunststoffschicht Reibungskräfte, sodass die Brandschutzmanschette während des Montagevorgangs einfacher in Position gehalten wird. Die Kunststoffschicht kann dazu eine entsprechende Dicke aufweisen. Zudem kann die Kunststoffschicht zumindest teilweise kompressibel sein, um eine vorteilhafte Positionierung während der Einbausituation zu ermöglichen.

In einer bevorzugten Ausgestaltung ist die Paketlänge des Bandpakets derart bemessen, dass zwischen dem Rohr, um das die Brandschutzmanschette angeordnet wird, und der Brandschutzmanschette selbst in radialer Richtung ein umlaufender Spalt bereitgestellt wird. Um den Spalt bereitzustellen, kann eine Länge der Verschlusselemente berücksichtigt werden.

Bevorzugt ist die Paketlänge des Bandpakets auf den Rohrdurchmesser abgestimmt, um einen Spalt entlang der radialen Richtung bereitzustellen. Die Spaltbreite und damit auch die Paketlänge des Bandpakets kann dabei insbesondere vom Rohrdurchmesser abhängen.

Beispielsweise kann ein das Rohr umlaufender Abstand zwischen dem Rohr und der Brandschutzmanschette von einem Zentimeter vorgesehen sein. Der Abstand kann generell dazu dienen, dass ein guter thermischer Kontakt zwischen dem Rohr und der Brandschutzmanschette vermieden wird. Zudem ist die Brandschutzmanschette im Allgemeinen an der Wand fixiert, das Rohr kann jedoch ein gewisses Spiel bezüglich des jeweiligen Durchbruchs aufweisen. Somit dient der Abstand auch dazu, Beschädigungen der Komponenten aufgrund von Relativbewegungen zu vermeiden. In dieser Ausgestaltung kann dann optional eine zumindest teilweise kompressible Kunststoffschicht mit einer Dicke von 1,5 cm vorgesehen sein. Da die Dicke der Kunststoffschicht größer als der nominelle Abstand zwischen Rohr und Brandschutzmanschette im Einbauzustand ist, wird durch die Kunststoffschicht bezüglich des Rohrs eine reibschlüssige Verbindung bereitgestellt, insbesondere wenn die Kunststoffschicht einen Schaumstoff umfasst. Dadurch kann Positionierung der Brandschutzmanschette während des Einbauvorgangs vereinfacht werden.

Bevorzugt weisen zumindest die Verschlusselemente, insbesondere aber auch die Montagevorrichtung, ein Metall auf. Dadurch wird vermieden, dass diese Komponenten im Brandfall vorzeitig schmelzen.

Optional können die Verschlusselemente mittels Arretierungsvorrichtungen an dem Bandpaket befestigt sein. Dabei können die Arretierungsvorrichtungen insbesondere Haken, Klammern, Schrauben, Nieten, Kleber und ähnliche Verbindungskomponenten umfassen. Somit wird eine Positionstreue der Verschlusselemente bezüglich des Bandpakets gewährleistet.

Bevorzugt weisen die Bänder eine Trägerschicht für das intumeszierende Material auf. Das bedeutet, dass die Bänder jeweils zumindest zweischichtig sein können. Die Trägerschicht kann dabei eine ausreichende strukturelle Stabilität bereitstellen, damit das intumeszierende Material, wenn es sich im Brandfall ausdehnt, entlang der radialen Richtung in Richtung des Zentrums der Brandschutzmanschette gezwungen wird. Die zweite Schicht kann im Wesentlichen das intumeszierende Material umfassen. Vorteilhaft ist die Trägerschicht jedes Bands des Bandpakets in der Einbausituation radial außenliegend relativ zur Schicht des intumeszierenden Materials angeordnet.

Sämtliche im Hinblick auf die verschiedenen Aspekte erläuterten Merkmale sind einzeln oder in (Sub-)Kombination mit anderen Aspekten kombinierbar.

Die Erfindung sowie weitere vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1 eine vereinfachte schematische Darstellung einer Brandschutzmanschette gemäß einer Ausführungsform,
- Fig. 2 eine vereinfachte schematische Darstellung eines Bandpakets,
- Fig. 3 eine vereinfachte schematische Darstellung eines Verschlusselements,
- Fig. 4 eine vereinfachte schematische Darstellung einer Brandschutzmanschette gemäß einer weiteren Ausführungsform,
- Fig. 5 eine vereinfachte schematische Darstellung einer Montagevorrichtung,
- Fig. 6 eine vereinfachte schematische Darstellung einer Brandschutzmanschette gemäß einer weiteren Ausführungsform, und
- Fig. 7 eine vereinfachte schematische Darstellung einer Brandschutzmanschette gemäß einer weiteren Ausführungsform.

Alle nachstehend in Bezug auf die Ausführungsbeispiele und/oder die begleitende Figur offengelegten Merkmale können allein oder in einer beliebigen Unterkombination mit Merkmalen der Aspekte der vorliegenden Offenbarung, einschließlich Merkmalen bevorzugter Ausführungsformen, kombiniert werden, vorausgesetzt, die sich ergebende Merkmalskombination ist für einen Fachmann auf dem Gebiet der Technik sinnvoll.

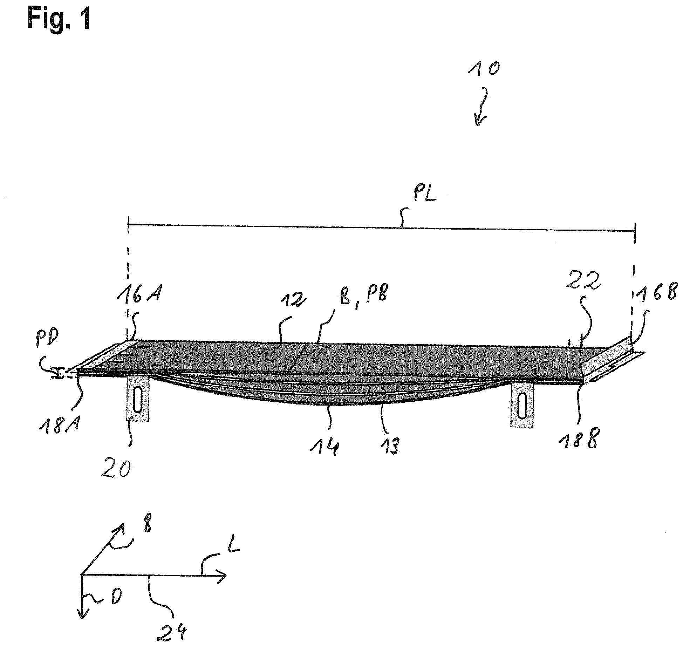

Figur 1 zeigt eine vereinfachte schematische Darstellung einer Brandschutzmanschette 10 gemäß einer Ausführungsform. Die Brandschutzmanschette 10 umfasst ein Bandpaket 12, das wiederum mehrere Bänder 14 aufweist. Die Bänder 14 sind generell parallel zueinander entlang der Längserstreckungsrichtung des Bandpakets 12 angeordnet. Insbesondere sind die Bänder 14 entlang der Paketlänge PL und der Bandpaketbreite PB entsprechend ihrer eigenen Breite B generell flächig zueinander angeordnet, also gestapelt.

Das Bandpaket 12 weist eine Paketdicke PD auf. Entlang der Paketdicke PD sind die Bänder 14 des Bandpakets 12 parallel zueinander angeordnet.

Die Bänder 14 sind in Bezug auf die jeweils gegenüberliegenden Flächen entlang der Längserstreckungsrichtung des Bandpakets 12 im Wesentlichen lose zueinander angeordnet, also ohne unmittelbare Kopplung zueinander, sodass Zwischenräume 13 zwischen den Bändern 14 entstehen.

Der Grund für die Zwischenräume 13 sind die notwendig unterschiedlichen Bandlängen der separaten Bänder 14. Wenn die Brandschutzmanschette 10 um das Rohr angeordnet ist, werden bezüglich der parallel angeordneten Bänder 14 aufgrund der unterschiedlichen radialen Abstände zum Zentrum der Brandschutzmanschette 10 unterschiedliche Bandlängen benötigt, damit die Bänder 14 in der Einbausituation ohne Zwischenräume 13 aneinander anliegend angeordnet sind. Die Zwischenräume 13 liegen deshalb nur in der künstlichen, nicht der Einbausituation entsprechenden, planen Erstreckung der Brandschutzmanschette 10 vor, zumindest wenn die Bänder 14 des Bandpakets 12 an den Enden 18A, 18B bündig miteinander abschließen.

Die Bänder 14 des Bandpakets 12 sind zwischen dem ersten Ende 18A und dem zweiten Ende 18B zumindest teilweise freiliegend. Das bedeutet, dass die Bänder 14 zumindest teilweise unabgestützt sind. Sie werden also zumindest teilweise entlang der Paketlänge PL nicht durch weitere Komponenten eingefasst.

Die Brandschutzmanschette 10 umfasst ein erstes Verschlusselement 16A und ein zweites Verschlusselement 16B. Das erste Verschlusselement 16A ist am ersten Ende 18A des Bandpakets 12 angeordnet. Das zweite Verschlusselement 16B ist am zweiten Ende 18B des Bandpakets 12 angeordnet. Bezüglich der Längserstreckungsrichtung des Bandpakets 12 sind das erste Ende 18A und das zweite Ende 18B gegenüberliegend angeordnet.

Die jeweiligen Verschlusselemente 16A, 16B umfassen Befestigungsvorrichtungen 20, mittels denen die Verschlusselemente 16A, 16B an einer externen Aufnahme fixierbar sind.

Ferner weisen die Verschlusselemente 16A, 16B Arretierungsvorrichtungen 22 auf, mittels denen sie an dem Bandpaket 12 fixierbar sind.

Das Koordinatensystem 24 veranschaulicht schematisch die Orientierung der Länge L, der Breite B und der Dicke D sowohl in Bezug auf die Bänder 14 als auch in Bezug auf das Bandpaket 12.

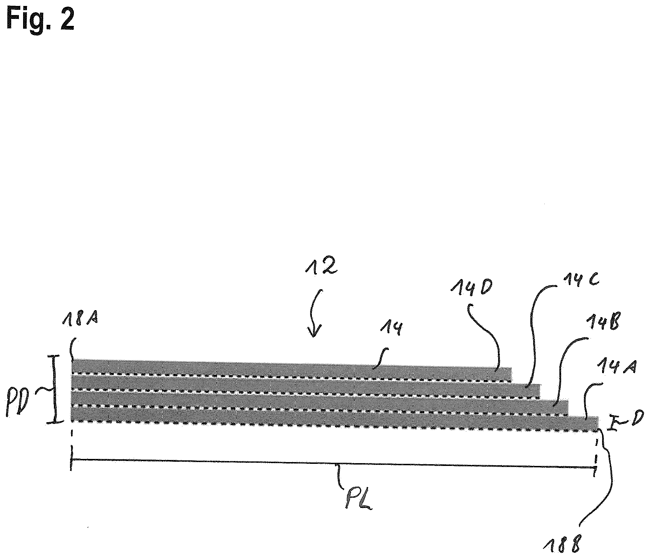

Figur 2 zeigt eine vereinfachte schematische Darstellung eines Bandpakets12. Das Bandpaket 12 umfasst vorliegend vier parallel angeordnete Bänder 14A bis 14D. Die einzelnen Bänder 14A bis 14D haben gemäß dieser Ausführungsform unterschiedliche Bandlängen. Die Bandpaketlänge PL des Bandpakets 12 ist dabei durch die Länge L desjenigen Bandes 14A bestimmt, dessen Länge L maximal ist.

Die Bänder 14A bis 14D sind am ersten Ende 18A des Bandpakets 12 bündig zueinander angeordnet. Aufgrund der unterschiedlichen Bandlängen der Bänder 14A bis 14B sind die Enden der Bänder 14A bis 14D am entgegengesetzten zweiten Ende 18B des Bandpakets 12 versetzt zueinander angeordnet, und zwar entlang der Längserstreckungsrichtung des Bandpakets 12.

Im Allgemeinen weisen die Bänder 14A bis 14D zumindest eine Zweischichtstruktur auf. Eine erste Schicht eines Bandes wirkt dabei als Trägerschicht, wohingegen die zweite Schicht zumindest teilweise ein intumeszierendes Material aufweist.

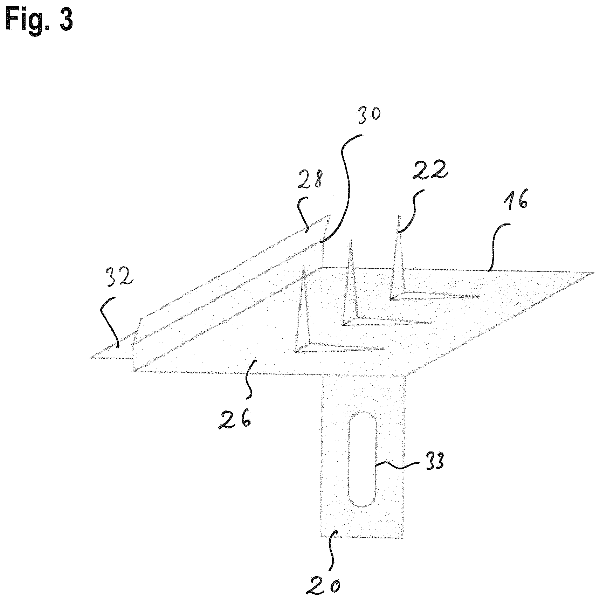

Figur 3 zeigt eine vereinfachte schematische Darstellung eines Verschlusselements 16. Das Verschlusselement 16 weist vorliegend als Haken ausgebildete Arretierungsvorrichtungen 22 auf. Die Arretierungsvorrichtungen 22 können sich in der Einbausituation zumindest teilweise durch das Bandpaket 12 hindurch erstrecken. Das Bandpaket 12 liegt dann auf der Auflagefläche 26 auf. Das Ende 18 des Bandpakets 12 liegt zumindest teilweise bündig an der Anstoßfläche 30 an. Gemäß dieser Ausführungsform können die Arretierungsvorrichtungen 22 dann in Richtung der Anstoßfläche 30 umgebogen werden und von einem ebenfalls umbiegbaren Abdeckungsabschnitt 28 verdeckt werden, sodass ein Verletzungsrisiko minimiert ist. Das Bandpaket 12 ist dann durch das Zusammenwirken des Abdeckungsabschnitts 28 und der Auflagefläche 26 mithilfe der Arretierungsvorrichtungen 22 durch das Verschlusselement 16 eingefasst.

Vorteilhaft können sich die Arretierungsvorrichtungen 22 und der Abdeckungsabschnitt 28 im Brandfall zurückbiegen (aufbiegen). Dadurch wird gewährleistet, dass diese Komponenten im Brandfall durch die Intumeszenz zurückgedrückt werden können, um der Expansion der Brandschutzmanschette 10 mehr Raum zu geben.

Das Verschlusselement 16 weist ferner einen Verschlussabschnitt 32 auf, der mit einem korrespondierenden Verschlussabschnitt 32 eines weiteren Verschlusselements 16 zusammenwirken kann. Insbesondere können die Verschlussabschnitte 32 derart zusammenwirken, dass eine zumindest formschlüssige Fixierung der Verschlusselemente 16 aneinander gewährleistet wird, wodurch eine geschlossene Kontur der Brandschutzmanschette 10 gewährleistet wird. Die Verschlussabschnitte 32 gewährleisten daher eine einfache Installationsmöglichkeit der Brandschutzmanschette 10, da sie geöffnet werden können, um die Möglichkeit bereitzustellen, die Brandschutzmanschette 10 um das Rohr herum zu positionieren. Anschließend können die Verschlussabschnitte 32 zusammenwirken und eine Fixierung der Brandschutzmanschette 10 bezüglich des Rohrs gewährleisten.

Die Befestigungsvorrichtung 20 umfasst vorliegend ein Langloch 33, um die Positionierung des Verschlusselements 16 an der externen Aufnahme zu vereinfachen.

Im Allgemeinen ist das Verschlusselement 16 aus einem metallenen Material gefertigt.

Das Verschlusselement 16 weist vorliegend keine komplexe Geometrie auf, sodass kostenintensive Stanz- und Biegewerkzeuge bei der Herstellung vermieden werden können. Insbesondere ist das Verschlusselement 16 auch für unterschiedliche Brandschutzmanschetten 10 in Abhängigkeit des jeweiligen Rohrdurchmessers geeignet. Es braucht daher lediglich ein Typ eines Verschlusselements 16 hergestellt werden. Das Verschlusselement 16 ist rohrgrößenuniversell.

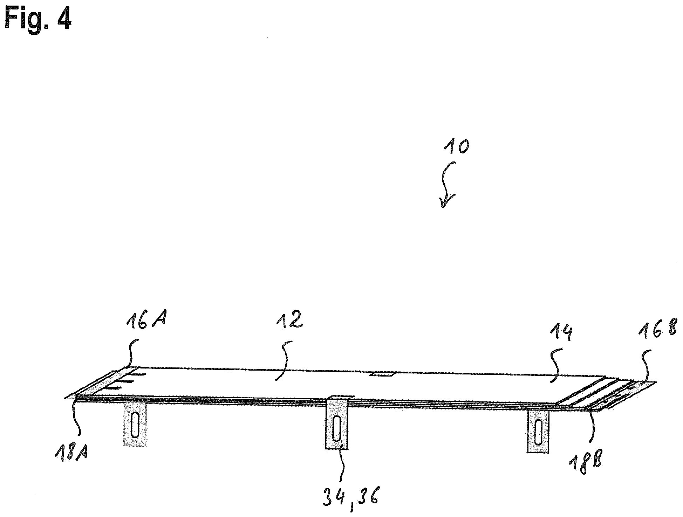

Figur 4 zeigt eine vereinfachte schematische Darstellung einer Brandschutzmanschette 12 gemäß einer weiteren Ausführungsform. Es wird hier nur auf Unterschiede zur vorhergehenden Ausführungsform eingegangen.

Das erste Verschlusselement 16A ist an einem ersten Ende 18A des Bandpakets 12 angeordnet, dessen Bänder 14 an diesen ersten Ende 18A bündig zueinander angeordnet sind.

Demgegenüber ist das zweite Verschlusselement 16B am zweiten Ende 18B des Bandpakets 12 angeordnet, dessen Bänder 14 an diesem zweiten Ende 18B versetzt zueinander abschließen.

Durch diese Anordnung können Zwischenräume 13 vermieden werden. Dennoch bewirken die unterschiedlichen Bandlängen der Bänder 14 des Bandpakets 12, dass keine zusätzlichen Spalte in der Einbausituation der Brandschutzmanschette 10 entstehen. Der Versatz zwischen den Bändern 14 entlang der Längserstreckungsrichtung des Bandpakets 12 im Bereich des zweiten Endes 18B des Bandpakets 12 ist derart gewählt, dass er der jeweiligen Längendifferenz zwischen benachbarten Bändern 14 entspricht, die in der Einbausituation durch die unterschiedlichen radialen Abstände zum Zentrum der Brandschutzmanschette 10 verursacht sind.

Die vorliegende Konfiguration zeigt Vorteile bezüglich der Lagerbarkeit, denn der benötigte Raum entlang der Paketdicke PD ist gegenüber beidseits bündig angeordneten Bändern 14 des Bandpakets 12 an den gegenüberliegenden Enden 18A, 18B reduziert. Der benötigte Lagerraum ist deshalb verringert.

Vorliegend weist die Brandschutzmanschette 10 zusätzlich eine weitere Befestigungsvorrichtung 34 auf, die durch eine Montagevorrichtung 36 bereitgestellt wird. Die Montagevorrichtung 36 stellt eine zusätzliche Kopplung der Bänder 14 des Bandpakets 12 zwischen dem ersten Ende 18A und dem zweiten Ende 18B bereit.

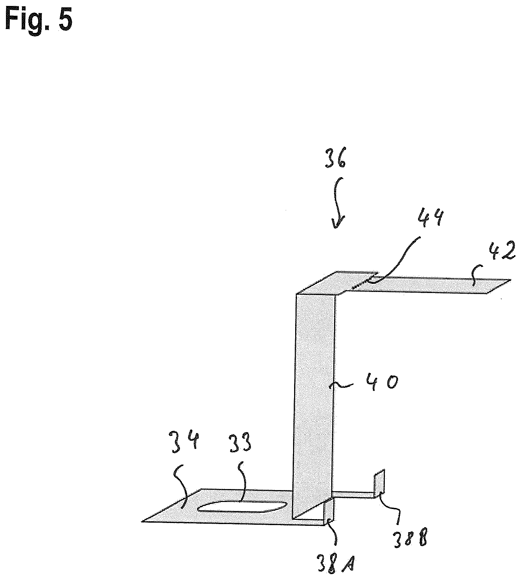

Figur 5 zeigt eine vereinfachte schematische Darstellung einer Montagevorrichtung 36. Die Montagevorrichtung 36 weist in bekannter Weise im Bereich der Befestigungsvorrichtung 34 ein Langloch 33 auf, das die Positionierung der Montagevorrichtung 36 an der externen Aufnahme vereinfacht.

Ferner weist die Montagevorrichtung 36 zwei paarweise angeordnete Klemmabschnitte 38A, 38B auf. In der Einbausituation liegt das Bandpaket 12an der Anlagefläche 40 der Montagevorrichtung 36 an und die Klemmabschnitte 38A, 38B umgreifen das Bandpaket 12. Der Abstand zwischen den Klemmabschnitten 38A, 38B und der Anlagefläche 40 entspricht daher der Paketdicke PD. Korrespondierend zu den Klemmabschnitten 38A, 38B weist die Montagevorrichtung 36 einen dritten Klemmabschnitt 42 auf, der an einer Knicklinie 44 umgebogen werden kann, um bezüglich des dann eingefassten Bandpakets 12 auf der entgegengesetzten Seite relativ zur Anlagefläche 40 angeordnet zu sein. Das Bandpaket 12 wird dann durch die Montagevorrichtung 36 eingefasst.

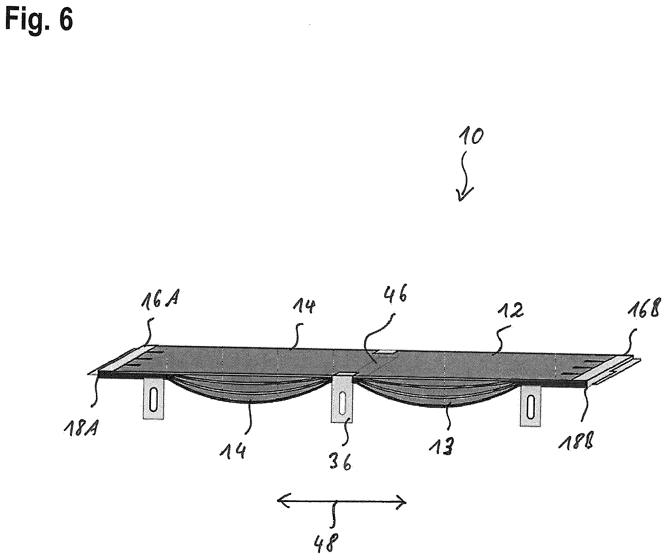

Figur 6 zeigt eine vereinfachte schematische Darstellung einer Brandschutzmanschette 10 gemäß einer weiteren Ausführungsform. Es wird hier nur auf Unterschiede zu den vorhergehenden Ausführungsformen eingegangen.

Die Montagevorrichtung 36 stellt in einem Kopplungsbereich 46 des Bandpakets 12 eine zusätzliche Kopplung der Bänder 14 des Bandpakets zueinander bereit. Dadurch wird die Montage der Brandschutzmanschette 10 vereinfacht, denn die Zwischenräume 13 werden deshalb senkrecht zur Längserstreckungsrichtung und der Breite des Bandpakets 12 limitiert. Generell ist die Montagevorrichtung 36 entlang der Längserstreckungsrichtung des Bandpakets 12 verschiebbar, was vorliegend durch den Pfeil 48 angedeutet ist. durch die Verschiebbarkeit wird die Montage der Brandschutzmanschette 10 nochmals vereinfacht, da die Montagevorrichtung 36 bedarfsgerecht positioniert werden kann. Natürlich kann die Brandschutzmanschette 10 auch zusätzliche Montagevorrichtungen 36 aufweisen.

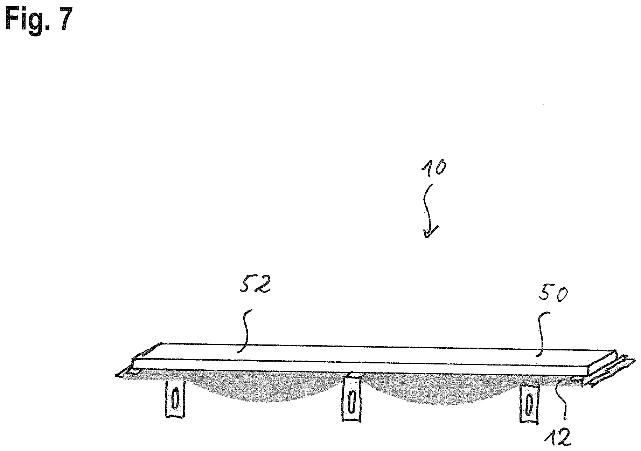

Figur 7 zeigt eine vereinfachte schematische Darstellung einer Brandschutzmanschette 10 gemäß einer weiteren Ausführungsform. Es wird hier nur auf Unterschiede zur vorhergehenden Ausführungsform eingegangen.

Die Brandschutzmanschette 10 weist nun zusätzlich eine Kunststoffschicht 50 auf. Die Kunststoffschicht 50 umfasst einen Schaumstoff 52 und ist, entsprechend der Einbausituation entlang der radialen Richtung der Brandschutzmanschette 10 innenliegend relativ zum Bandpaket 12 und parallel dazu angeordnet.

Der Schaumstoff 52 der Kunststoffschicht 50 ist kompressibel und kann Reibungskräfte bezüglich des Rohrs bewirken, um das die Brandschutzmanschette 10 zu installieren ist. Durch die Reibungskräfte wird verhindert, dass die Brandschutzmanschette 10 das Rohr ungewollt entlang rutscht, bevor die Brandschutzmanschette 10 beispielsweise mittels Befestigungsvorrichtungen 20, 34 an einer externen Aufnahme fixiert ist. Dadurch wird die Montage vereinfacht.

In der vorliegenden Offenbarung kann auf Mengen und Zahlen Bezug genommen werden. Sofern nicht ausdrücklich angegeben, sind solche Mengen und Zahlen nicht als einschränkend zu betrachten, sondern als Beispiele für die möglichen Mengen oder Zahlen im Zusammenhang mit der vorliegenden Offenbarung. In diesem Zusammenhang kann in der vorliegenden Offenbarung auch der Begriff "Mehrzahl" verwendet werden, um auf eine Menge oder Zahl zu verweisen. In diesem Zusammenhang ist mit dem Begriff "Mehrzahl" jede Zahl gemeint, die größer als eins ist, z. B. zwei, drei, vier, fünf, usw. Die Begriffe "etwa", "ungefähr", "nahe" usw. bedeuten plus oder minus 5 % des angegebenen Wertes.

## Patentansprüche

1. Brandschutzmanschette (10) für ein Rohr umfassend ein Bandpaket (12) zumindest teilweise ein intumeszierendes Material aufweisend, ein erstes und ein zweites Verschlusselement (16A, 16B), wobei das erste Verschlusselement (16A) an einem ersten Ende (18A) des Bandpakets (12) angeordnet ist und wobei das zweite Verschlusselement (16B) an einem dem ersten Ende (18A) entgegengesetzten zweiten Ende (18B) des Bandpakets (12) angeordnet ist, wobei das erste Verschlusselement (16A) und das zweite Verschlusselement (16B) miteinander derart verschließbar sind, dass das Bandpaket (12) eine im Wesentlichen geschlossene Kontur ausbildet, **dadurch gekennzeichnet, dass** das Bandpaket (12) zwischen dem ersten Ende (18A) und dem zweiten Ende (18B) des Bandpakets (12) eine Paketlänge (PL) aufweist und zumindest teilweise entlang der Paketlänge (PL) freiliegend ist.

2. Brandschutzmanschette (10) nach Anspruch 1 **dadurch gekennzeichnet, dass** das jeweilige Verschlusselement (16A, 16B) das Bandpaket (12) am jeweiligen Ende (18A, 18B) zumindest teilweise einfasst.

3. Brandschutzmanschette (10) nach Anspruch 1 oder 2 **dadurch gekennzeichnet, dass** jedes Verschlusselement (16A, 16B) zumindest eine Befestigungsvorrichtung (20) aufweist, mittels der die Brandschutzmanschette (10) an einer externen Aufnahme fixierbar ist.

4. Brandschutzmanschette (10) nach einem der vorherigen Ansprüche **dadurch gekennzeichnet, dass** das Bandpaket (12) entlang der Paketlänge (PL) mehrere separate, parallel angeordnete Bänder (14) aufweist.

5. Brandschutzmanschette (10) nach Anspruch 4 **dadurch gekennzeichnet, dass** die Bänder (14) unterschiedliche Bandlängen (L) aufweisen.

6. Brandschutzmanschette (10) nach Anspruch 4 oder 5 **dadurch gekennzeichnet, dass** erste die Paketlänge (PL) definierende Bandenden der Bänder (14) am ersten Ende (18A) des Bandpakets (12) relativ zueinander bündig angeordnet sind, und
dass die Paketlänge (PL) definierende, den ersten Bandenden entgegengesetzte zweite Bandenden der Bänder (14) am zweiten Ende (18B) des Bandpakets (12) relativ zueinander ebenfalls bündig angeordnet sind, oder
dass die zweiten Bandenden am zweiten Ende (18B) des Bandpakets (12) entlang der Paketlänge (PL) zueinander versetzt angeordnet sind.

7. Brandschutzmanschette (10) nach einem der vorherigen Ansprüche **dadurch gekennzeichnet, dass** sie ferner zumindest eine Montagevorrichtung (36) aufweist, die das Bandpaket (12) zwischen dem ersten Ende (18A) und dem zweiten Ende (18B) zumindest teilweise einfasst und abfängt.

8. Brandschutzmanschette (10) nach Anspruch 7 **dadurch gekennzeichnet, dass** die Montagevorrichtung (36) entlang der Paketlänge (PL) verschiebbar ist.

9. Brandschutzmanschette (10) nach Anspruch 7 oder 8 **dadurch gekennzeichnet, dass** die Montagevorrichtung (36) zumindest eine zusätzliche Befestigungsvorrichtung (34) aufweist, mittels der die Brandschutzmanschette (10) an der externen Aufnahme fixierbar ist.

10. Brandschutzmanschette (10) nach einem der vorherigen Ansprüche **dadurch gekennzeichnet, dass** an das Bandpaket (12) der Paketlänge (PL) nach angrenzend eine Kunststoffschicht (50) angeordnet ist.
